# EUROPEAN PATENT APPLICATION

(11) **EP 4 642 093 A1**
(43) Date of publication of application: **29.10.2025**
(21) Application number: 22969033.4
(22) Date of filing: 23.12.2022
(51) Int. Cl.: H04W 36/00

(54) **INFORMATION PROCESSING METHOD AND APPARATUS, AND COMMUNICATION DEVICE AND STORAGE MEDIUM**

(71) Applicant: Beijing Xiaomi Mobile Software Co., Ltd., Beijing 100085 (CN)
(72) Inventor: XIONG, Yi, Beijing 100085 (CN); WU, Yumin, Beijing 100085 (CN)
(74) Representative: Stöckeler, Ferdinand
(86) International application number: PCT/CN2022/141637
(87) International publication number: WO 2024/130746

(57) **Abstract**

Provided in the embodiments of the present disclosure are an information processing method and apparatus, and a communication device and a storage medium. The information processing method is executed by a user equipment (UE), and the method comprises: according to whether a first cell is a serving cell of a UE, determining whether to perform an operation related to a mobility configuration of the first cell.

## Description

### FIELD

The present disclosure relates to, but is not limited to, the field of wireless communication, in particular to an information processing method and apparatus, a communication device and a storage medium.

### BACKGROUND

In multi-rate dual connectivity (MR-DC), a user equipment (UE) may use radio resources provided by two different schedules, which are located at two different next generation radio access network (NG-RAN) nodes, and are connected through non-ideal backhaul. One node provides a new radio (NR) access, and the other node provides an evolved universal terrestrial radio access (E-UTRA, i.e., an evolved UMTS terrestrial radio access) or an NR access. One node is a master node (MN), and the other node is a secondary node (SN). The MN and SN are connected through a network interface, and at least the MN is connected to a core network.

In the related art, in view of mobility enhancement, selective activation of cell groups in the MR-DC is proposed, and a network device may provide the UE with the cell group to be activated, which may make the subsequent configuration still be executed after the cell group (CG) is changed. There is no need for the network device to reconfigure or reinitialize the configuration of the corresponding cell group selective activation, that is, in the cell group selective activation, the UE will not delete the configuration of the corresponding cell group selective activation after activating the new cell group configuration, which may reduce the signaling overhead and the interruption duration of CG change.

### SUMMARY

Embodiments of the present disclosure provide an information processing method and device, a communication device and a storage medium.

Embodiments of a first aspect of the present disclosure provide an information processing method, which is executed by a user equipment (UE), and includes: determining whether to perform an operation related to a mobility configuration of a first cell according to whether the first cell is a serving cell of the UE.

Embodiments of a second aspect of the present disclosure provide an information processing apparatus, which is applied to a user equipment (UE), and includes: a processing module configured to determine whether to perform an operation related to a mobility configuration of a first cell according to whether the first cell is a serving cell of the UE.

Embodiments of a third aspect of the present disclosure provide a communication device, which includes a processor, a memory and an executable program stored in the memory and configured to be executed by the processor, and the processor executes the information processing method as described in the first aspect when executing the executable program.

Embodiments of a fourth aspect of the present disclosure provide a computer storage medium storing an executable program that, when executed by a processor, causes the information processing method described in the first aspect to be realized.

According to the technical scheme provided by the embodiments of the present disclosure, the UE determines whether to execute the operation related to the mobility configuration of the first cell according to whether the first cell is the serving cell of the UE. Compared with executing the operation related to the mobility configuration of the current serving cell of the UE regardless of whether the first cell is the serving cell of the UE, the technical scheme of the present disclosure may reduce unnecessary resource waste caused by executing the operation related to the mobility configuration of the serving cell, or avoid signal interruption and so on.

It should be understood that both the foregoing general description and the following detailed description are illustrative and explanatory only, and are not restrictive of the embodiments of the present disclosure.

### BRIEF DESCRIPTION OF THE DRAWINGS

The accompanying drawings, which are incorporated in and constitute a part of this specification, illustrate embodiments consistent with the present disclosure and together with the description, serve to explain the principles of the embodiments of the present disclosure.
Fig. 1 is a schematic diagram of a wireless communication system according to an illustrative embodiment.
Fig. 2 is an architectural schematic diagram of a dual connectivity system according to an illustrative embodiment.
Fig. 3 is a flow chart of an information processing method according to an illustrative embodiment.
Fig. 4 is a flow chart of an information processing method according to an illustrative embodiment.
Fig. 5 is a flow chart of an information processing method according to an illustrative embodiment.
Fig. 6 is a flow chart of an information processing method according to an illustrative embodiment.
Fig. 7 is a flow chart of an information processing method according to an illustrative embodiment.
Fig. 8 is a flow chart of an information processing method according to an illustrative embodiment.
Fig. 9 is a flow chart of an information processing method according to an illustrative embodiment.
Fig. 10 is a flow chart of an information processing method according to an illustrative embodiment.
Fig. 11 is a flow chart of an information processing method according to an illustrative embodiment.
Fig. 12 is a schematic diagram of an information processing apparatus according to an illustrative embodiment.
Fig. 13 is a schematic diagram of a communication device according to an illustrative embodiment.

### DETAILED DESCRIPTION

Reference will now be made in detail to illustrative embodiments, examples of which are illustrated in the accompanying drawings. When the following description refers to the drawings, unless otherwise indicated, the same numbers in different drawings indicate the same or similar elements. The implementations described in the following illustrative embodiments do not represent all implementations consistent with the embodiments of the present disclosure. Rather, they are merely examples of devices and methods consistent with some aspects of the embodiments of the present disclosure.

The terms used in the embodiments of the present disclosure are for the purpose of describing specific embodiments only, and are not intended to limit the embodiments of the present disclosure. The singular forms "a", "the" and "said" used in the present disclosure are also intended to include the plural forms, unless the context clearly indicates other meaning. It should also be understood that the term "and/or" used herein refers to and includes any or all possible combinations of one or more associated listed items. In addition, in the present disclosure, a slash (/) or a comma (,) may mean "and/or". For example, "A/B" may mean "A and/or B".

It should be understood that although the terms first, second, third, etc. may be used to describe various information in the embodiments of the present disclosure, these information should not be limited to these terms. These terms are only used to distinguish the same type of information from each other. For example, without departing from the scope of the embodiments of the present disclosure, the first parameter may also be called the second parameter, and similarly, the second parameter may also be called the first parameter. Depending on the context, the word "if" as used herein may be interpreted as "when" or "while" or "in response to determining".

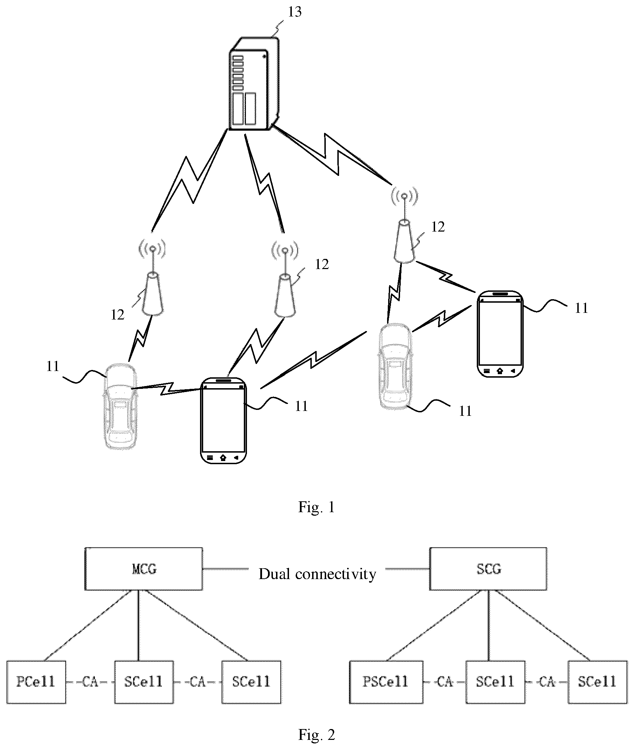

Referring to Fig. 1, Fig. 1 shows a schematic diagram of a wireless communication system provided by an embodiment of the present disclosure. As shown in Fig. 1, the wireless communication system is a communication system based on a cellular mobile communication technology, and may include at least one UE 11 and at least two access network devices 12.

The UE 11 may be a device that provides voice and/or data connectivity to users. The UE 11 may communicate with one or more core networks via a radio access network (RAN), and through the core networks, the UE may connect with external network devices such as the Internet and other UEs. The UE 11 may be an Internet of Things UE, such as a sensor device, a mobile phone (or a "cellular" phone) and a computer with an Internet of Things UE, and for example, may be a fixed, portable, pocket-sized, handheld, computer-built or vehicle-mounted device, such as a station (STA), a subscriber unit, a subscriber station, a mobile station, a mobile, a remote station, an access point, a remote UE (i.e., a remote terminal), an access UE (i.e., an access terminal), a user terminal, a user agent, a user device, or a user equipment (UE). Alternatively, the UE 11 may be equipment of an unmanned aerial vehicle (UAV). Alternatively, the UE 11 may also be a vehicle-mounted device, for example, a driving computer with a wireless communication function or a wireless communication device with an external driving computer. Alternatively, the UE 11 may also be a roadside device, such as a street lamp, a signal lamp or other roadside devices with a wireless communication function.

The access network device 12 may be a network-side device in a wireless communication system. The wireless communication system may be a 4th generation mobile communication (4G) system, also known as a long term evolution (LTE) system. Alternatively, the wireless communication system may also be a 5G system, also known as a new radio (NR) system or a 5G NR system. Alternatively, the wireless communication system may also be a next generation system of the 5G system. The access network in the 5G system may be called a new generation-radio access network (NG-RAN) or a machine type communication (MTC) system.

The access network device 12 may be an evolved access device (eNB) adopted in the 4G system. Alternatively, the access network device 12 may also be an access device (gNB) adopting a centrally distributed architecture in the 5G system. When the access network device 12 adopts the centrally distributed architecture, it usually includes a central unit (CU) and at least two distributed units (DUs). The central unit is provided with a protocol stack of a packet data convergence protocol (PDCP) layer, a radio link control (RLC) protocol layer and a media access control (MAC) layer; and a physical (PHY) layer protocol stack is arranged in the distributed unit. The embodiments of the present disclosure do not limit the specific implementation of the access network device 12.

A wireless connection may be established between the access network device 12 and the UE 11 through a wireless air interface. In different embodiments, the wireless air interface is a wireless air interface based on the 4th generation mobile communication network technology (4G) standard; alternatively, the wireless air interface is a wireless air interface based on the 5th generation mobile communication network technology (5G) standard, for example, the wireless air interface is a new radio air interface; alternatively, the wireless air interface may also be a wireless air interface based on a next generation mobile communication network technology standard of 5G.

An end to end (E2E) or device to device (D2D) connection may also be established between the UEs 11, for example, a vehicle to vehicle (V2V) communication, a vehicle to infrastructure (V2I) communication and a vehicle to pedestrian (V2P) communication in a vehicle to everything (V2X) communication.

The access network device 12 may be located in a communication system integrated with a satellite communication system, may provide connection services for satellites, and may access the satellites into the core network. For example, the access network device 12 may be an access network device with a satellite gateway function in a communication system, such as a gateway device, a ground station device, a non-terrestrial networks gateway/satellite gateway (NTN-Gateway), and the like.

The above wireless communication system may further include a core network device 13. Several access network devices 12 are respectively connected with the core network device 13.

For example, the core network device 13 may be a mobility management entity (MME) in an evolved packet core (EPC). Alternatively, the core network device may also be an enhanced serving mobile location centre (E-SMLC).

For another example, the core network device 13 may be an access and mobility management function (AMF), a location management function (LMF), a gateway mobile location center (GMLC), etc. The embodiments of the present disclosure do not limit the implementation form of the core network device 13.

It should be noted that the network architecture shown in Fig. 1 is only an example to which the embodiments of the present disclosure are applicable, and does not constitute a limitation on the application scope of the embodiments of the present disclosure.

In order to facilitate the understanding of those skilled in the art, the embodiments of the present disclosure list a plurality of implementations to clearly explain the technical scheme of the embodiments of the present disclosure. Of course, those skilled in the art may understand that the implementations provided by the embodiments of the present disclosure may be executed alone, executed after being combined with methods in others of the embodiments of the present disclosure, or executed together with some methods in other related technologies thereafter, which is not limited by the embodiments of the present disclosure.

Depending on different core networks of the MR-DC connection, the MR-DC may include: an MR-DC connected to the EPC and an MR-DC connected to a next generation core NGC.
1. MR-DC connected to EPC.
   The evolved UMTS terrestrial radio access network (E-UTRAN) supports the MR-DC through an E-UTRA-NR dual connectivity (EN-DC), in which the UE is connected to an eNB acting as the MN and an en-gNB acting as the SN. The eNB is connected to the EPC through an S1 interface and to the en-gNB through an X2 interface. The en-gNB may also be connected to the EPC through an S1-U interface, or to other en-gNBs through an X2-U interface.
2. MR-DC connected to NGC
   A) E-UTRA-NR dual connectivity (NGEN-DC)
      The NG-RAN supports NG-RAN and E-UTRA-NR dual connectivity (NGEN-DC), in which the UE is connected to one ng-eNB acting as the MN and one gNB acting as the SN. The ng-eNB is connected to a 5th generation core (5GC), and the gNB is connected to the ng-eNB through an Xn interface.
   B) NR-E-UTRA dual connectivity (NE-DC)
      The NG-RAN supports NR-E-UTRA dual connectivity (NE-DC), in which the UE is connected to a gNB acting as the MN and a ng-eNB acting as the SN. The gNB is connected to a 5GC, and the ng-eNB is connected to the gNB through an Xn interface.
   C)NR-NR dual connectivity (NR-DC)

The NG-RAN supports NR-NR dual connectivity (NR-DC), in which the UE is connected to one gNB acting as the MN and the other gNB acting as the SN. The master gNB is connected to a 5GC through a NG interface, two gNBs are connected through an Xn interface, and the secondary gNB may also be connected to the 5GC through a NG-U interface. In addition, the NR-DC may also be used for the UE to access a single gNB, which serves as the MN and SN at the same time, and a master cell group (MCG) and a secondary cell group (SCG) are configured at the same time.

As shown in Fig. 2, under the dual connectivity, the UE may access two cell groups, namely, the master cell group (MCG) and the secondary cell group (SCG). Under the MCG, there may be many cells, one of which is for initiating an initial access, and is called a primary cell (PCell). The PCell under the MCG and a secondary cell (SCell) under the MCG are coupled by carrier aggregation (CA). The primary cell in the MCG is the PCell and the secondary cell in the MCG is the SCell. A primary secondary cell in the SCG is a PSCell and the secondary cell in the SCG is the SCell. Since a lot of signaling is only sent on the PCell and the PSCell, for the convenience of description, a concept of a special Cell (sPCell) is also defined in the protocol, and both the PCell and the PSCell are collectively referred to as the sPCell.

In a condition-based mobility operation, such as a conditional handover (CHO), a conditional PSCell Change (CPC) or a conditional PSCell addition (CPA), a UE configured with CHO/CPC/CPA must release the CHO/CPC/CPA configuration when completing random access to a target PCell/PSCell. Therefore, if the network does not reconfigure and reinitialize CHO/CPC/CPA, the UE will have no chance to continue to execute CHO/CPC/CPA subsequently. This will increase the delay of handover or SCG change and increase the signal overhead, especially in the application scenario of frequency range (FR) 2, when the cell group (CG) is changed frequently.

Therefore, in the related mobility enhancement project, the selective activation of the cell group in the MR-DC is proposed, which may make the subsequent configuration still be implemented after the CG changes, without the network reconfiguring or reinitializing the corresponding configuration of the selective activation of the cell group. This may reduce the signaling overhead and the interruption duration of the CG change.

In the selective activation of the cell group, the network device may provide the UE with the cell group to be activated. Subsequently, the cell group to be activated may be activated or deactivated without providing the configuration of the cell group again. That is, in the cell group selective activation, after activating a new cell group configuration, the UE will not delete the corresponding configuration of the cell group selective activation.

The selective activation of the cell group may also be called cell group activation. The cell group activation may make the corresponding configuration information still be executed after the cell group or cell is changed, without the network reconfiguring or reinitializing the corresponding configuration information of the cell group activation. Therefore, the cell group activation may reduce the signaling overhead and the interruption duration of the cell group change.

In an embodiment, the configuration information of the cell group activation may include a configuration identity (ID) and configuration of a target cell or configuration of a target cell group. Optionally, the configuration information of the cell group activation may also include a trigger condition (also called an execution condition or an activation condition).

In an embodiment, the selective activation of the cell group is a mobility management process, in which by configuring cell group activation configuration, a terminal activates or deactivates a corresponding cell or cell group according to a signaling sent by a network, or a criteria specified by a protocol, or autonomously, or accesses a cell or cell group after applying a corresponding cell configuration or cell group configuration.

In an embodiment, the selective activation of the cell group is a mobility management process, in which part or all of corresponding configuration information is not deleted or released after a mobility process is executed. Not deleting or releasing part or all of the corresponding configuration information may also be called retaining part or all of the corresponding configuration information.

In the present disclosure, a cell group is one or more of a master cell group (MCG) and a secondary cell group (SCG). The MCG includes one or more of a primary cell (PCell) and a secondary cell (SCell). The SCG includes one or more of a primary secondary Cell (PSCell) and a secondary cell (SCell).

In the present disclosure, the selective activation of the cell group may also be called a cell group activation, and may include one or more of an MCG activation and an SCG activation.

In the present disclosure, the selective activation of the cell may also be called a cell activation, and may include one or more of a PCell activation, a PSCell activation and an SCell activation.

In the introduction of the selective activation of the cell group, there are multiple cell groups to be activated, and the multiple cell groups to be activated are selectively activated. Different from the condition-based mobility operation (CHO/CPA/CPC), in the process of the cell group selective activation, the UE will save the corresponding configuration information after performing cell group change or cell group addition. The corresponding configuration information may also contain configuration information corresponding to a cell group currently activated by the UE. For the configuration information stored by the UE, the UE needs to perform a corresponding measurement and evaluate whether a trigger condition is met. On one hand, this will cause unnecessary resource waste; on the other hand, once the UE meets the trigger condition corresponding to a current serving cell group, the UE will re-apply the configuration of an original serving cell group and initiate a random access channel (RACH), which will cause unnecessary interruption and radio resource control (RRC) reconfiguration.

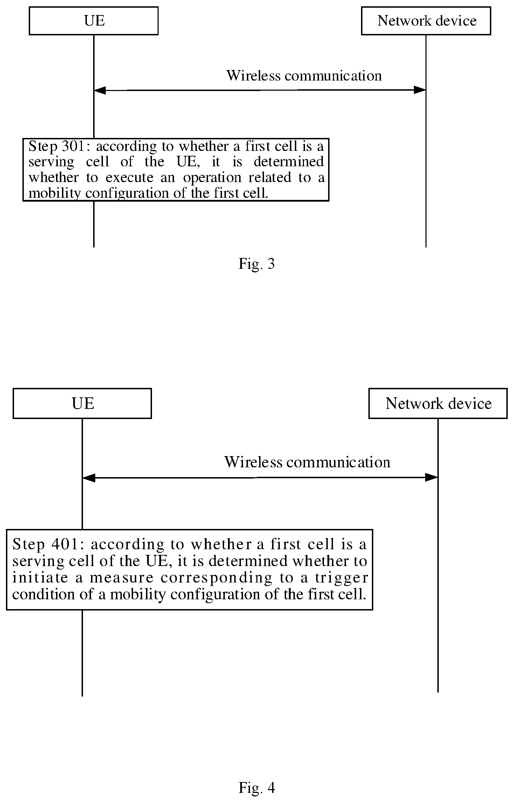

Fig. 3 is a flow chart of an information processing method according to an illustrative embodiment. The information processing method is performed by UE, and as shown in Fig. 3, the method may include the following steps.

In step 301, according to whether a first cell is a serving cell of the UE, it is determined whether to execute an operation related to a mobility configuration of the first cell.

In this embodiment, the UE includes, but is not limited to, a mobile phone, a tablet computer, a wearable device, a vehicle-mounted terminal and/or an Internet of Things terminal.

The serving cell of the UE refers to a cell where the UE currently camps on or is providing data transmission for the UE.

In some examples, the first cell may be any cell, for example, the first cell may be a cell that the UE has not randomly accessed at present, that is, the first cell may be any cell other than the serving cell of the UE. Of course, the first cell may also be the serving cell of the UE.

In some examples, the UE may determine by itself whether the first cell is the serving cell of the UE, or other network elements may determine whether the first cell is the serving cell of the UE, and inform the UE of the result through a specific signaling, which is not limited by the present disclosure.

Optionally, the method may further include determining whether the first cell is the serving cell of the UE.

**In** some examples, the first cell may be a candidate cell group and the serving cell is a serving cell group; or the first cell is a candidate cell in a candidate cell group, and the serving cell is a serving cell in a serving cell group.

Here, the candidate cell group may be a master cell group or a secondary cell group to be accessed.

As an example, multiple first cells may be provided, that is, the multiple first cells are grouped into candidate cell groups of the UE, and multiple serving cells are provided, and are grouped into serving cell groups of the UE.

As an example, one first cell may be provided, and is a candidate cell in a candidate cell group of the UE, and one serving cell may be provided, and is a serving cell in a serving cell group of the UE.

**In** some examples, the candidate cell group is a master cell group (MCG) or a secondary cell group (SCG); and the candidate cell is a primary cell (PCell), a primary secondary cell (PSCell), or a secondary cell (SCell).

**In** some examples, the first cell may be a candidate cell group, such as a candidate master cell group or a candidate secondary cell group.

**In** some examples, the first cell may be a candidate cell, such as a candidate primary cell, a candidate primary secondary cell, or a candidate secondary cell.

For example, determining whether the first cell is the serving cell of the UE includes one or more of:
determining whether the first cell is a serving master cell group of the UE in response to the first cell being the candidate cell group;
determining whether the first cell is a serving secondary cell group of the UE in response to the first cell being the candidate cell group;
determining whether the first cell is a serving primary cell of the UE in response to the first cell being the candidate cell;
determining whether the first cell is a serving primary secondary cell of the UE in response to the first cell being the candidate cell; and
determining whether the first cell is a serving secondary cell of the UE in response to the first cell being the candidate cell.

For example, taking that the first cell is the candidate cell group as an example, in response to the first cell being the candidate cell group, it may be determined whether the first cell is the serving master cell group of the UE according to whether configuration information contained in mobility configuration of the candidate cell group corresponds to a cell group identifier of the serving master cell group.

For example, in a case that the configuration information contained in the mobility configuration of the candidate cell group corresponds to the cell group identifier of the serving master cell group, it is determined that the first cell is the serving master cell group of the UE; and in a case that the configuration information contained in the mobility configuration of the candidate cell group does not correspond to the cell group identifier of the serving master cell group, it is determined that the first cell is not the serving master cell group of the UE.

**In** some examples, the mobility configuration may be used for selective activation of a cell group or selective activation of a cell.

**In** some examples, the mobility configuration of the first cell may include at least one of:
a configuration identifier;
a trigger condition associated with one or more measurement identifiers;
configuration information of a candidate cell group or a candidate cell; and
indication information indicating that the mobility configuration is used for a mobility operation.

**In** this example, the configuration identifier may be, for example, condReconfigId (i.e., a condition reconfiguration ID); and the trigger condition may be, for example, condExecutionCond and/or condExecutionCondSCG. The trigger condition may be represented by the one or more measurement identifiers.

The configuration information of the candidate cell group or candidate cell may be, for example, condRRCReconfig. The configuration information of the candidate cell group or candidate cell may be represented by RRCReconfiguration.

**In** some examples, the operation related to the mobility configuration of the first cell may include one of:
initiating a measurement corresponding to a trigger condition of the mobility configuration of the first cell;
evaluating the trigger condition of the mobility configuration of the first cell, in which the trigger condition is contained in the mobility configuration of the first cell; and
executing the mobility configuration of the first cell, in a case that the trigger condition of the mobility configuration of the first cell is met.

That is, in some embodiments, in response to the first cell being the serving cell of the UE, the operation related to the mobility configuration of the first cell is not executed, for example, the measurement corresponding to the trigger condition of the mobility configuration of the first cell is not initiated; or the trigger condition of the mobility configuration of the first cell is not evaluated, and the trigger condition is contained in the mobility configuration of the first cell; or, when the trigger condition of the mobility configuration of the first cell is met, the mobility configuration of the first cell is not executed.

**In** some embodiments, in response to the first cell not being the serving cell of the UE, the operation related to the mobility configuration of the first cell is executed. For example, the measurement corresponding to the trigger condition of the mobility configuration of the first cell is initiated; or the trigger condition of the mobility configuration of the first cell is evaluated, and the trigger condition is contained in the mobility configuration of the first cell; or the mobility configuration of the first cell is executed, when the trigger condition of the mobility configuration of the first cell is met.

For example, in a case that the first cell is the serving cell group/cell of the UE, the UE does not initiate the measurement of the first cell which serves as a candidate cell group/cell. For example, the UE does not initiate the measurement corresponding to the trigger condition of the mobility configuration of the first cell, and the measurement may be, for example, measuring a signal strength of the first cell. Alternatively, the UE may not evaluate the trigger condition of the mobility configuration of the first cell after obtaining a measurement result of the first cell. Alternatively, when the first cell meets the trigger condition of the mobility configuration of the first cell, the UE may not execute the mobility configuration of the first cell, for example, not select the first cell as a target cell for mobility (i.e., a selected cell).

For another example, in a case that the first cell is not the serving cell group/cell of the UE, the UE may initiate the measurement of the first cell which serves as the candidate cell group/cell. For example, the UE may initiate the measurement corresponding to the trigger condition of the mobility configuration of the first cell, and the measurement may be, for example, measuring a signal strength of the first cell. Alternatively, the UE may evaluate the trigger condition of the mobility configuration of the first cell based on a measurement result of the first cell. Alternatively, when the first cell meets the trigger condition of the mobility configuration of the first cell, the UE may execute the mobility configuration of the first cell, for example, select the first cell as a target cell for mobility (i.e., a selected cell).

**In** some examples, executing the mobility configuration of the first cell may include one of:
determining the first cell as a trigger cell;
selecting the first cell as a selected cell when the first cell is the trigger cell; and
applying the configuration information of the first cell when the first cell is the selected cell.

**In** some embodiments, in response to the first cell being the serving cell of the UE, when the trigger condition of the mobility configuration of the first cell is met, the operation related to the mobility configuration of the first cell is not executed. For example, the first cell is not determined as the trigger cell; or, when the first cell is the trigger cell, the first cell is not selected as the selected cell; or, when the first cell is the selected cell, the configuration information of the first cell is not applied.

In some embodiments, in response to the first cell not being the serving cell of the UE, when the trigger condition of the mobility configuration of the first cell is met, the operation related to the mobility configuration of the first cell is executed. For example, the first cell is determined as the trigger cell; or, when the first cell is the trigger cell, the first cell is selected as the selected cell; or, when the first cell is the selected cell, the configuration information of the first cell is applied.

In the present disclosure, a candidate cell may serve as the trigger cell when the trigger condition of the mobility configuration of the candidate cell is met.

In the present disclosure, when a candidate cell is activated, the candidate cell is changed to a serving cell. Here, when the configuration information contained in the mobility configuration of a candidate cell is applied, the candidate cell is activated.

In the information processing method of the embodiments of the present disclosure, the UE determines whether to execute the operation related to the mobility configuration of the first cell according to whether the first cell is the serving cell of the UE. Compared with that the UE executes the operation related to the mobility configuration of the current serving cell of the UE regardless of whether the first cell is the serving cell of the UE, executing different operations according to whether the first cell is the current serving cell of the UE may reduce unnecessary resource waste caused by executing the operation related to the mobility configuration of the serving cell, or avoid signal interruption and so on.

In an embodiment, in step 301, determining whether to execute the operation related to the mobility configuration of the first cell according to whether the first cell is the serving cell of the UE may include one of:
determining whether to initiate the measurement corresponding to the trigger condition of the mobility configuration of the first cell according to whether the first cell is the serving cell of the UE;
determining whether to evaluate the trigger condition of the mobility configuration of the first cell according to whether the first cell is the serving cell of the UE; and
determining whether to execute the mobility configuration of the first cell according to whether the first cell is the serving cell of the UE.

In some possible embodiments, when the UE determines that the first cell is not the serving cell of the UE, the measurement corresponding to the trigger condition of the mobility configuration of the first cell is initiated.

In some possible embodiments, when the UE determines that the first cell is the serving cell of the UE, the measurement corresponding to the trigger condition of the mobility configuration of the first cell is not initiated.

In some possible embodiments, when the UE determines that the first cell is not the serving cell of the UE, the trigger condition of the mobility configuration of the first cell is evaluated.

In some possible embodiments, when the UE determines that the first cell is the serving cell of the UE, the trigger condition of the mobility configuration of the first cell is not evaluated.

In some possible embodiments, when the UE determines that the first cell is not the serving cell of the UE, the mobility configuration of the first cell is executed in a case that the trigger condition of the mobility configuration of the first cell is met.

In some possible embodiments, when the UE determines that the first cell is the serving cell of the UE, the mobility configuration of the first cell is not executed even in a case that the trigger condition of the mobility configuration of the first cell is met.

An embodiment of the present disclosure provides an information processing method, which is performed by UE. As shown in Fig. 4, the method may include the following steps.

In step 401, according to whether a first cell is a serving cell of the UE, it is determined whether to initiate a measurement corresponding to a trigger condition of a mobility configuration of the first cell.

In some examples, the measurement corresponding to the trigger condition is a measurement corresponding to a measurement identifier corresponding to the trigger condition, a corresponding measurement object may be determined according to the measurement identifier, and a frequency corresponding to the measurement object is a frequency corresponding to a measurement reference signal corresponding to the first cell. A measurement result of the first cell may be obtained by measuring the measurement identifier corresponding to the trigger condition.

In some examples, the measurement corresponding to the trigger condition may be, for example, a measurement of a reference signal receiving power (RSRP), a reference signal received quality (RSRQ) and/or a signal to interference plus noise ratio (SINR) of the first cell.

In this embodiment, it is determined whether to initiate the measurement corresponding to the trigger condition of the mobility configuration of the first cell according to whether the first cell is the serving cell of the UE. Compared with initiating the measurement corresponding to the trigger condition of the mobility configuration of the first cell regardless of whether the first cell is the serving cell of the UE, the present disclosure may reduce unnecessary resource waste and other similar situations caused by initiating the measurement corresponding to the trigger condition of the mobility configuration of the serving cell.

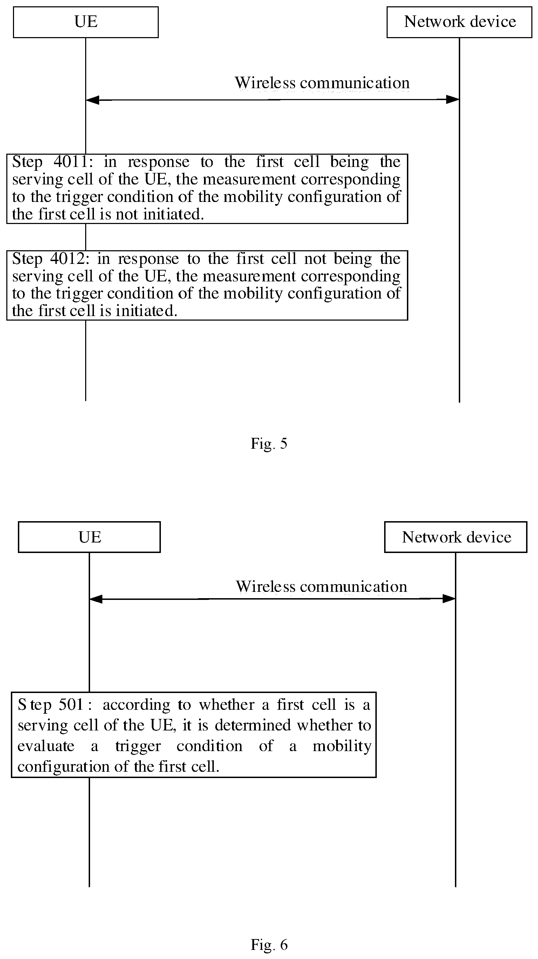

In an embodiment, as shown in Fig. 5, determining whether to initiate the measurement corresponding to the trigger condition of the mobility configuration of the first cell according to whether the first cell is the serving cell of the UE includes at least one of the following steps.

In step 4011, in response to the first cell being the serving cell of the UE, the measurement corresponding to the trigger condition of the mobility configuration of the first cell is not initiated.

In some embodiments, when the first cell is the serving cell of the UE, the UE may determine not to initiate the measurement corresponding to the trigger condition of the mobility configuration of the first cell.

In this embodiment, in response to the first cell being the serving cell of the UE, the measurement corresponding to the trigger condition of the mobility configuration of the first cell may not be initiated, and the measurement may be, for example, the measurement of the RSRP, RSRQ and/or SINR of the first cell.

In step 4012, in response to the first cell not being the serving cell of the UE, the measurement corresponding to the trigger condition of the mobility configuration of the first cell is initiated.

In some embodiments, when the first cell is not the serving cell of the UE, the UE may determine to initiate the measurement corresponding to the trigger condition of the mobility configuration of the first cell.

In response to the first cell not being the serving cell of the UE, the measurement corresponding to the trigger condition of the mobility configuration of the first cell may be initiated, and the measurement may be, for example, the measurement of the RSRP, RSRQ and/or SINR of the first cell.

In an embodiment, in step 4011, in response to the first cell being the serving cell of the UE, not initiating the measurement corresponding to the trigger condition of the mobility configuration of the first cell may include:

in response to that the first cell is the serving cell of the UE and a measurement identifier corresponding to the trigger condition of the mobility configuration of the first cell is not associated with mobility configurations of other cells, a measurement of the measurement identifier corresponding to the trigger condition of the mobility configuration of the first cell is not initiated.

That is, in a case that the first cell is the serving cell of the UE, the UE further determines whether to initiate the measurement of the measurement identifier corresponding to the trigger condition of the mobility configuration of the first cell according to whether the measurement identifier corresponding to the trigger condition of the mobility configuration of the first cell is not associated with the mobility configurations of other cells.

For example, when the measurement identifier corresponding to the trigger condition of the mobility configuration of the first cell is not associated with the mobility configurations of other cells, the UE does not initiate the measurement of the measurement identifier corresponding to the trigger condition of the mobility configuration of the first cell.

For another example, when the measurement identifier corresponding to the trigger condition of the mobility configuration of the first cell is associated with the mobility configurations of other cells, the UE initiates the measurement of the measurement identifier corresponding to the trigger condition of the mobility configuration of the first cell.

The other cells refer to other candidate cells except the first cell. For example, the network device configures the respective mobility configurations of four candidate cells for the UE, namely, Cell 1, Cell 2, Cell 3 and Cell 4. When the serving cell of the UE is Cell 1, assuming that the first cell is the serving cell of the UE, the other cells are Cell 2, Cell 3 and Cell 4.

The trigger condition may correspond to one or more measurement identifiers, which may be related to or correspond to a combination of a measurement object and a reporting configuration, where the measurement identifier, the measurement object and the reporting configuration may all be determined based on the measurement configuration received by the UE from the network device. The measurement object may indicate object information that the UE should measure. For example, the object information may include a measurement frequency and/or a reference signal configuration.

One measurement identifier may only be associated with the trigger condition of the mobility configuration of one candidate cell, and may also be associated with the trigger conditions of the mobility configurations of multiple candidate cells.

For example, when the first cell is the serving cell of the UE, in a case that a certain measurement identifier is only associated with the trigger condition of the mobility configuration of the first cell, that is, the measurement identifier associated with the trigger condition of the mobility configuration of the first cell is not associated with other mobility configurations, then the measurement of the measurement identifier corresponding to the trigger condition of the mobility configuration of the first cell may not be initiated.

In another embodiment, in step 4011, in response to the first cell being the serving cell of the UE, not initiating the measurement corresponding to the trigger condition of the mobility configuration of the first cell may include:
in response to that the first cell is the serving cell of the UE and the measurement object associated with the measurement identifier corresponding to the trigger condition of the mobility configuration of the first cell is not associated with other measurement identifiers, not initiating the measurement of the measurement identifier corresponding to the trigger condition of the mobility configuration of the first cell.

In this embodiment, when the first cell is the serving cell of the UE and only one measurement object is associated with the trigger condition of the mobility configuration of the first cell, the measurement of the measurement identifier corresponding to the trigger condition of the mobility configuration of the first cell may not be initiated.

An embodiment of the present disclosure provides an information processing method, which is performed by UE. As shown in Fig. 6, the method may include the following steps.

In step 501, according to whether a first cell is a serving cell of the UE, it is determined whether to evaluate a trigger condition of a mobility configuration of the first cell.

In some examples, the trigger condition of the mobility configuration of the first cell may include a trigger condition consisting of one or more mobility events. For example, the trigger condition includes, but is not limited to, one or more of: event A3, event A4, event A5, event A3 and event A3, event A5 and event A5, event A3 and event A5, event A4 and event A4.

Event A3 indicates that a conditional reconfiguration candidate is higher than a PCell/PSCell by a certain offset.

Event A4 indicates that the conditional reconfiguration candidate is higher than an absolute threshold.

Event A5 indicates that the PCell/PSCell is below an absolute threshold, and the conditional reconfiguration candidate is above another absolute threshold.

For example, the trigger condition includes, for example, event A3 and event A3. A measurement quantity corresponding to one of the two events A3 may be RSRP, and a measurement quantity corresponding to the other event A3 may be RSRQ.

For example, the trigger condition includes, for example, event A3 and event A5. A measurement quantity corresponding to event A3 may be RSRP, and a measurement quantity corresponding to event A5 may be RSRQ.

For example, the trigger condition includes, for example, event A3 and event A5. A measurement quantity corresponding to event A3 may be RSRQ, and a measurement quantity corresponding to event A5 may be RSRP.

In this embodiment, by determining whether to evaluate the trigger condition of the mobility configuration of the first cell according to whether the first cell is the serving cell of the UE, compared with that the UE will evaluate the trigger condition of the mobility configuration of the first cell regardless of whether the first cell is the serving cell of the UE, the present disclosure may reduce unnecessary resource waste and other similar situations caused by evaluating the trigger condition of the mobility configuration of the serving cell.

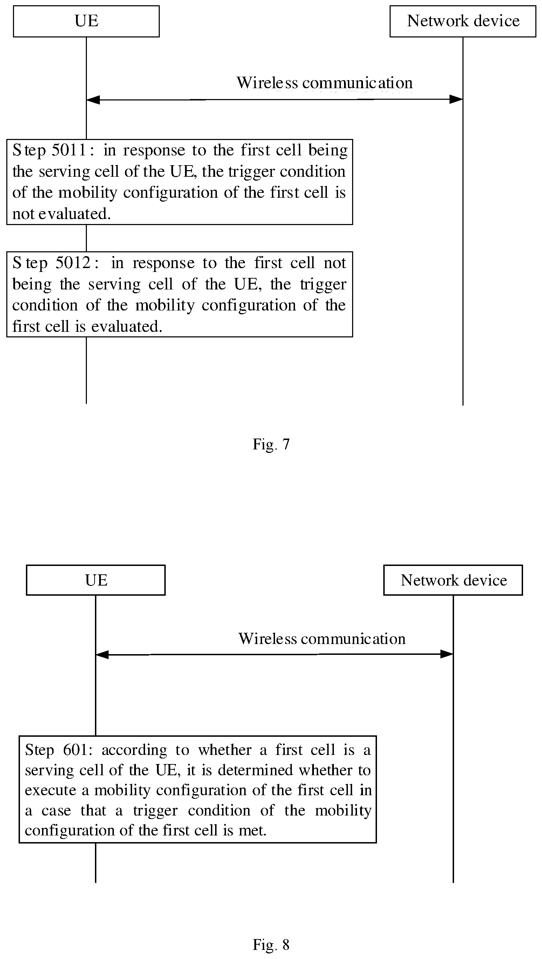

In an embodiment, as shown in Fig. 7, determining whether to evaluate the trigger condition of the mobility configuration of the first cell according to whether the first cell is the serving cell of the UE may include at least one of the following steps.

In step 5011, in response to the first cell being the serving cell of the UE, the trigger condition of the mobility configuration of the first cell is not evaluated.

In some embodiments, when the first cell is the serving cell of the UE, the UE may determine not to evaluate the trigger condition of the mobility configuration of the first cell.

The trigger condition of the mobility configuration of the first cell corresponds to the measurement identifier. The trigger condition of the mobility configuration of the first cell may be evaluated based on the measurement result of the measurement object (e.g., the measurement frequency) associated with the measurement identifier corresponding to the trigger condition.

In some examples, the first cell is a candidate cell group/cell, and for each mobility configuration stored by the UE, when a cell group/cell identifier corresponding to the configuration information of the candidate cell group/cell contained in the mobility configuration corresponds to the current serving cell group/cell, the evaluation of the corresponding trigger condition is not initiated.

For example, for the first cell serving as a candidate MCG, when a mobility configuration contains configuration information of the candidate MCG, and a cell group identifier of the candidate MCG corresponds to a current serving master cell group of the UE, the evaluation of the trigger condition of the mobility configuration is not initiated.

For example, for the first cell serving as a candidate SCG, when a certain mobility configuration contains configuration information of the candidate SCG, and a cell group identifier of the candidate SCG corresponds to a current serving secondary cell group of the UE, the evaluation of the trigger condition of the mobility configuration is not initiated.

For example, for the first cell serving as a candidate PCell, when a certain mobility configuration contains configuration information of the candidate PCell, and a cell identifier of the candidate PCell corresponds to a current serving primary cell of the UE, the evaluation of the trigger condition of the mobility configuration is not initiated.

For example, for the first cell serving as a candidate PSCell, when a certain mobility configuration contains configuration information of the candidate PSCell, and a cell identifier of the candidate PSCell corresponds to a current serving primary secondary cell of the UE, the evaluation of the trigger condition of the mobility configuration is not initiated.

For example, for the first cell serving as a candidate SCell, when a certain mobility configuration contains configuration information of the candidate SCell, and a cell identifier of the candidate SCell corresponds to a current serving secondary cell of the UE, the evaluation of the trigger condition of the mobility configuration is not initiated.

In some examples, when an identifier of a certain mobility configuration is a mobility identifier corresponding to a latest triggered mobility operation, it may be determined that the first cell is the serving cell of the UE, and the evaluation of the corresponding trigger condition is not initiated.

For example, when a certain mobility configuration contains configuration information of a candidate MCG, and a mobility configuration identifier of the mobility configuration is the mobility identifier corresponding to the latest triggered mobility operation, it may be determined that the candidate MCG is a current serving master cell group of the UE, and the evaluation of the trigger condition of the mobility configuration is not initiated.

For example, when a certain mobility configuration contains configuration information of a candidate SCG, and a mobility configuration identifier of the mobility configuration is the mobility identifier corresponding to the latest triggered mobility operation, it may be determined that the candidate SCG is a current serving secondary cell group of the UE, and the evaluation of the trigger condition of the mobility configuration is not initiated.

For example, when a certain mobility configuration contains configuration information of a candidate PCell, and a mobility configuration identifier of the mobility configuration is the mobility identifier corresponding to the latest triggered mobility operation, it may be determined that the candidate PCell is a current serving master cell group of the UE, and the evaluation of the trigger condition of the mobility configuration is not initiated.

For example, when a certain mobility configuration contains configuration information of a candidate PSCell, and a mobility configuration identifier of the mobility configuration is the mobility identifier corresponding to the latest triggered mobility operation, it may be determined that the candidate PSCell is a current serving primary secondary cell group of the UE, and the evaluation of the trigger condition of the mobility configuration is not initiated.

For example, when a certain mobility configuration contains configuration information of a candidate SCell, and a mobility configuration identifier of the mobility configuration is the mobility identifier corresponding to the latest triggered mobility operation, it may be determined that the candidate SCell is a current serving secondary cell group of the UE, and the evaluation of the trigger condition of the mobility configuration is not initiated.

In some examples, when a certain mobility configuration is consistent with the configuration of the current serving cell group/cell, the evaluation of the corresponding trigger condition is not initiated.

For example, when configuration information of a candidate MCG contained in a certain mobility configuration is consistent with configuration information of a current serving master cell group of the UE, the evaluation of the trigger condition of the mobility configuration is not initiated.

For example, when configuration information of a candidate SCG contained in a certain mobility configuration is consistent with configuration information of a current serving secondary cell group of the UE, the evaluation of the trigger condition of the mobility configuration is not initiated.

For example, when configuration information of a candidate PCell contained in a certain mobility configuration is consistent with configuration information of a current serving primary cell of the UE, the evaluation of the trigger condition of the mobility configuration is not initiated.

For example, when configuration information of a candidate PSCell contained in a certain mobility configuration is consistent with configuration information of a current serving primary secondary cell of the UE, the evaluation of the trigger condition of the mobility configuration is not initiated.

For example, when configuration information of a candidate SCell contained in a certain mobility configuration is consistent with configuration information of a current serving secondary cell of the UE, the evaluation of the trigger condition of the mobility configuration is not initiated.

In some examples, when an applicable cell corresponding to a certain mobility configuration identifier is the current serving cell, the evaluation of the corresponding trigger condition is not initiated.

For example, for each mobility configuration identifier stored by the UE, when a mobility configuration corresponding to the mobility configuration identifier contains configuration information of a candidate MCG, and a cell indicated in a serving cell public configuration contained in the configuration information of the candidate MCG is the applicable cell, the evaluation of the trigger condition of the mobility configuration is not initiated in a case that the applicable cell is a serving primary cell.

For example, for each mobility configuration identifier stored by the UE, when a mobility configuration corresponding to the mobility configuration identifier contains configuration information of a candidate SCG, and a cell indicated in a serving cell public configuration contained in the configuration information of the candidate SCG is the applicable cell, the evaluation of the trigger condition of the mobility configuration is not initiated in a case that the applicable cell is a serving primary secondary cell.

In step 5012, in response to the first cell not being the serving cell of the UE, the trigger condition of the mobility configuration of the first cell is evaluated.

In some embodiments, when the first cell is not the serving cell of the UE, the UE may determine to evaluate the trigger condition of the mobility configuration of the first cell.

In some examples, the first cell is a candidate cell group/cell, and for each mobility configuration stored by the UE, when a cell group/cell identifier corresponding to the configuration information of the candidate cell group/cell contained in the mobility configuration is not the current serving cell group/cell, the evaluation of the corresponding trigger condition is initiated.

In some examples, when a mobility configuration identifier of a certain mobility configuration is not a mobility identifier corresponding to the latest triggered mobility operation, the evaluation of the trigger conditions of the mobility configuration is initiated.

In some examples, when a certain mobility configuration is inconsistent with the configuration of the current serving cell, the evaluation of the trigger condition of the mobility configuration is initiated.

In some examples, when an applicable cell corresponding to a certain mobility configuration identifier is not the current serving cell, the evaluation of the corresponding trigger condition is initiated.

An embodiment of the present disclosure provides an information processing method, which is performed by UE. As shown in Fig. 8, the method may include the following steps.

In step 601, according to whether a first cell is a serving cell of the UE, it is determined whether to execute a mobility configuration of the first cell in a case that a trigger condition of the mobility configuration of the first cell is met.

In this embodiment, it is determined whether to execute the mobility configuration of the first cell according to whether the first cell is the serving cell of the UE, when the trigger condition of the mobility configuration of the first cell is met. Compared with executing the mobility configuration of the first cell regardless of whether the first cell is the serving cell of the UE, when the trigger condition of the mobility configuration of the first cell is met, the present disclosure may prevent the interruption and RRC reconfiguration caused by the UE applying the configuration of the current serving cell and initiating the RACH again when the trigger condition corresponding to the current serving cell is met.

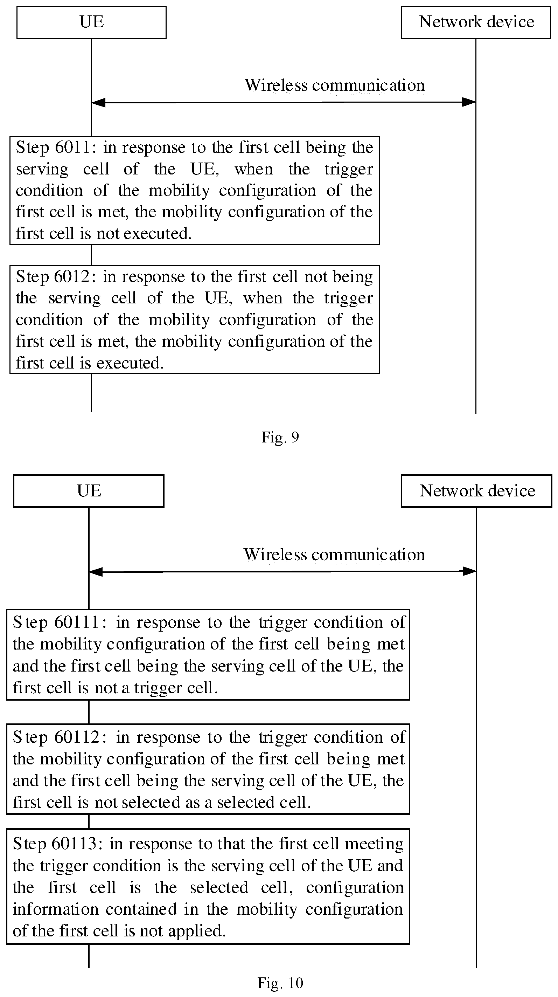

In an embodiment, as shown in Fig. 9, determining whether to execute the mobility configuration of the first cell according to whether the first cell is the serving cell of the UE when the trigger condition of the mobility configuration of the first cell is met may include at least one of the following steps.

In step 6011, in response to the first cell being the serving cell of the UE, when the trigger condition of the mobility configuration of the first cell is met, the mobility configuration of the first cell is not executed.

In step 6012, in response to the first cell not being the serving cell of the UE, when the trigger condition of the mobility configuration of the first cell is met, the mobility configuration of the first cell is executed.

In some embodiments, when the first cell is the serving cell of the UE and the trigger condition of the mobility configuration of the first cell is met, the UE may determine not to execute the mobility configuration of the first cell.

In some embodiments, when the first cell is not the serving cell of the UE and the trigger condition of the mobility configuration of the first cell is met, the UE may determine to execute the mobility configuration of the first cell. In this embodiment, the UE may not execute the mobility configuration of the first cell when the first cell is the serving cell of the UE and the trigger condition of the mobility configuration of the first cell is met, and may execute the mobility configuration of the first cell when the first cell is not the serving cell of the UE and the trigger condition of the mobility configuration of the first cell is met, so as to prevent the interruption and RRC reconfiguration caused by the UE applying the configuration of the current serving cell and initiating the RACH again when the trigger condition corresponding to the current serving cell is met.

In an embodiment, as shown in Fig. 10, in step 6011, in response to the first cell being the serving cell of the UE, not executing the mobility configuration of the first cell when the trigger condition of the mobility configuration of the first cell is met, may include one of the following steps.

In step 60111, in response to the trigger condition of the mobility configuration of the first cell being met and the first cell being the serving cell of the UE, the first cell is not a trigger cell.

Here, the first cell is a candidate cell group/cell, and when the candidate cell group/cell that meets the trigger condition is the current serving cell group/cell of the UE, the candidate cell group/cell cannot be used as a trigger cell group/cell, that is, the first cell is not the trigger cell group/cell.

For example, for each mobility configuration stored by the UE, when the trigger condition corresponding to the mobility configuration is met and the candidate cell group/cell corresponding to the mobility configuration is the current serving cell group/cell, the candidate cell group/cell cannot be used as the trigger cell group/cell.

In step 60112, in response to the trigger condition of the mobility configuration of the first cell being met and the first cell being the serving cell of the UE, the first cell is not selected as a selected cell.

In some examples, when executing the mobility operation, the UE does not select the serving cell group/cell as the selected cell group/cell. That is, when the trigger cell group/cell is a non-serving cell group/cell, the trigger cell group/cell may be used as the selected cell group/cell.

In step 60113, in response to that the first cell meeting the trigger condition is the serving cell of the UE and the first cell is the selected cell, configuration information contained in the mobility configuration of the first cell is not applied.

In some examples, when the selected cell group/cell is the current serving cell group/cell, the UE does not apply the corresponding cell group/cell configuration information.

For example, when executing mobility operation, when a selected access cell group/cell is the current serving cell group/cell, the UE does not apply the corresponding cell group/cell configuration information.

For example, when executing the condition-based mobility operation, in a case that the last mobility operation is also a condition-based mobility operation, and the selected access cell group/cell is the current serving cell group/cell, the UE does not apply the corresponding cell group/cell configuration information.

For example, when executing the mobility operation, in a case that the selected access cell group/cell is the current serving cell group/cell, and the configuration information of the current serving cell of the UE is the same as the configuration corresponding to the selected cell, the corresponding cell group/cell configuration information is not applied.

In an embodiment, in step 60112, in response to that the trigger condition of the mobility configuration of the first cell is met and the first cell is the serving cell of the UE, not selecting the first cell as the selected cell includes the following step.

In a case that the mobility operation executed this time and the last mobility operation are both condition-based mobility operations, when the trigger condition of the mobility configuration of the first cell is met and the first cell is the serving cell of the UE, it is determined not to select the first cell as the selected cell.

In some examples, the condition-based mobility operation may be, for example, a conditional handover (CHO), a conditional PSCell change (CPC) or a conditional PSCell addition (CPA).

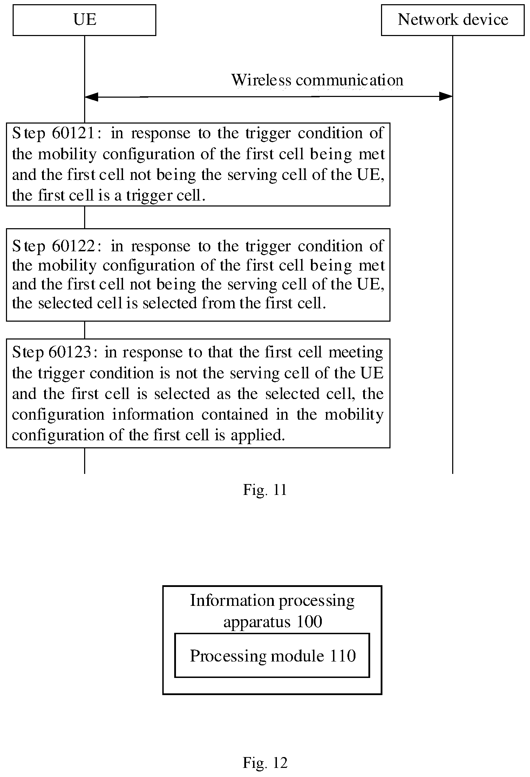

In an embodiment, as shown in Fig. 11, in step 6012, in response to the first cell not being the serving cell of the UE, when the trigger condition of the mobility configuration of the first cell is met, determining to execute the mobility configuration of the first cell may include one of the following steps.

In step 60121, in response to the trigger condition of the mobility configuration of the first cell being met and the first cell not being the serving cell of the UE, the first cell is a trigger cell.

Here, the first cell is a candidate cell group/cell, and when the candidate cell group/cell that meets the trigger condition is not the current serving cell group/cell of the UE, the candidate cell group/cell may be used as a trigger cell group/cell, that is, the first cell is the trigger cell group/cell.

For example, for each mobility configuration stored by the UE, when the trigger condition corresponding to the mobility configuration is met and the candidate cell group/cell corresponding to the mobility configuration is not the current serving cell group/cell, the candidate cell group/cell may be used as the trigger cell group/cell.

In step 60122, in response to the trigger condition of the mobility configuration of the first cell being met and the first cell not being the serving cell of the UE, the selected cell is selected from the first cell.

In some examples, when executing the mobility operation, the UE may select the selected cell group/cell from the trigger cell group/cell of the non-serving cell group/cell.

For example, when executing the condition-based mobility operation, in a case that the last mobility operation is also a condition-based mobility operation, the UE does not select the current serving cell group/cell as the selected cell group/cell.

For example, when executing the mobility operation, in a case that the candidate cell group/cell corresponding to the mobility operation configuration stored by the UE is the current serving cell group/cell of the UE, and the configuration information of the current serving cell group/cell of the UE is the same as the configuration corresponding to the candidate cell group/cell, the UE selects the selected cell group/cell from the trigger cell group/cell of the non-serving cell group/cell.

For example, when there are multiple trigger cell groups/cells that are not the serving cell groups/cells, the trigger cell group/cell of one of the non-serving cells is selected as the selected cell group/cell, and when there is one trigger cell group/cell that is not the serving cell group/cell, the trigger cell group/cell is the selected cell group/cell.

For example, when there are multiple selected cell groups/cells, the selected cell group/cell is selected from the trigger cell group/cell of the non-serving cell group/cell.

In step 60123, in response to that the first cell meeting the trigger condition is not the serving cell of the UE and the first cell is selected as the selected cell, the configuration information contained in the mobility configuration of the first cell is applied.

In some examples, when executing the mobility operation, in a case that the selected access cell group/cell is not the current serving cell group/cell, the corresponding cell group/cell configuration information is applied.

For example, when executing the mobility operation, in a case that the selected access cell group/cell is not the current serving cell group/cell, the UE applies the corresponding cell group/cell configuration information.

For example, when executing the condition-based mobility operation, in a case that the last mobility operation is also a condition-based mobility operation, and the selected access cell group/cell is not the current serving cell group/cell, the UE applies the corresponding cell group/cell configuration information.

For example, when executing the mobility operation, in a case that the selected access cell is not the current serving cell group/cell, or the configuration information of the current serving cell of the UE is different from the configuration corresponding to this selected cell, the corresponding cell group/cell configuration information is applied.

For example, when executing the mobility operation, for the selected cell, in a case that this cell is not the serving cell, the stored configuration information (for example, condRRCReconfig) of the selected cell is applied to execute a behavior related to receiving RRC reconfiguration information.

In an embodiment, in step 60122, in response to that the trigger condition of the mobility configuration of the first cell is met and the first cell is not the serving cell of the UE, selecting the first cell as the selected cell may include the following step.

In a case that both the mobility operation executed this time and the last mobility operation are condition-based mobility operations, when the trigger condition of the mobility configuration of the first cell is met and the first cell is not the serving cell of the UE, it is determined to select the first cell as the selected cell.

In some examples, the condition-based mobility operation may be, for example, a conditional handover (CHO), a conditional PSCell change (CPC) or a conditional PSCell addition (CPA).

In an embodiment, the method further includes at least one of:
determining whether the first cell is the serving cell of the UE according to whether configuration information contained in the mobility configuration of the first cell corresponds to a cell identifier of the serving cell;
determining whether the first cell is the serving cell of the UE according to whether a configuration identifier of the mobility configuration of the first cell corresponds to a latest triggered mobility operation;
determining whether the first cell is the serving cell of the UE according to whether the mobility configuration of the first cell is consistent with a mobility configuration of the serving cell; and
determining whether the first cell is the serving cell of the UE according to whether an applicable cell indicated by the mobility configuration of the first cell is the serving cell.

In some examples, determining whether the first cell is the serving cell of the UE according to whether the configuration information contained in the mobility configuration of the first cell corresponds to the cell identifier of the serving cell may include:
determining that the first cell is the serving cell of the UE when the configuration information contained in the mobility configuration of the first cell corresponds to the cell identifier of the serving cell; or determining that the first cell is not the serving cell of the UE when the configuration information contained in the mobility configuration of the first cell does not correspond to the cell identifier of the serving cell.

For example, in a case that the first cell is a candidate MCG, when a certain mobility configuration contains the configuration information of the candidate MCG and the configuration information of the candidate MCG corresponds to a cell group identifier of a serving master cell group of the UE, it is determined that the first cell is the serving master cell group of the UE; or, when a certain mobility configuration contains configuration information of the candidate MCG and the configuration information of the candidate MCG does not correspond to a cell group identifier of a serving master cell group of the UE, it is determined that the first cell is not the serving master cell group of the UE.

For example, in a case that first cell is a candidate SCG, when a certain mobility configuration contains configuration information of the candidate SCG and the configuration information of the candidate SCG corresponds to a cell group identifier of a serving secondary cell group of the UE, it is determined that the first cell is the serving secondary cell group of the UE; or, when a certain mobility configuration contains configuration information of the candidate SCG and the configuration information of the candidate SCG does not correspond to a cell group identifier of a serving secondary cell group of the UE, it is determined that the first cell is not the serving secondary cell group of the UE.

For example, in a case that the first cell is a candidate PCell, when a certain mobility configuration contains configuration information of the candidate PCell and the configuration information of the candidate PCell corresponds to a cell identifier of a serving primary cell of the UE, it is determined that the first cell is the serving primary cell of the UE; or, when a certain mobility configuration contains configuration information of the candidate PCell and the configuration information of the candidate PCell does not correspond to a cell identifier of a serving primary cell of the UE, it is determined that the first cell is not the serving primary cell of the UE.

For example, in a case that the first cell is a candidate PSCell, when a certain mobility configuration contains configuration information of the candidate PSCell and the configuration information of the candidate PSCell corresponds to a cell identifier of a serving primary secondary cell of the UE, it is determined that the first cell is the serving primary secondary cell of the UE; or, when a certain mobility configuration contains configuration information of the candidate PSCell and the configuration information of the candidate PSCell does not correspond to a cell identifier of a serving primary secondary cell of the UE, it is determined that the first cell is not the serving primary secondary cell of the UE.

For example, in a case that the first cell is a candidate SCell, when a certain mobility configuration contains configuration information of the candidate SCell and the configuration information of the candidate SCell corresponds to a cell identifier of a serving secondary cell of the UE, it is determined that the first cell is the serving secondary cell of the UE; or, when a certain mobility configuration contains configuration information of the candidate SCell and the configuration information of the candidate SCell does not correspond to a cell identifier of a serving secondary cell of the UE, it is determined that the first cell is not the serving secondary cell of the UE.

In some examples, determining whether the first cell is the serving cell of the UE according to whether the configuration identifier of the mobility configuration of the first cell corresponds to the latest triggered mobility operation may include:
determining that the first cell is the serving cell of the UE when the configuration identifier of the mobility configuration of the first cell corresponds to the latest triggered mobility operation; or determining that the first cell is not the serving cell of the UE when the configuration identifier of the mobility configuration of the first cell does not correspond to the latest triggered mobility operation.

For example, in a case that the first cell is a candidate MCG, when a certain mobility configuration contains configuration information of the candidate MCG and a mobility configuration identifier corresponding to the mobility configuration is a mobility identifier corresponding to a latest triggered mobility operation, it may be determined that the candidate MCG is a serving master cell group of the UE; or, when a certain mobility configuration contains configuration information of the candidate MCG and a mobility configuration identifier of the mobility configuration is not a mobility identifier corresponding to a latest triggered mobility operation, it may be determined that the candidate MCG is not a serving master cell group of the UE.

For example, in a case that the first cell as a candidate SCG, when a certain mobility configuration contains configuration information of the candidate SCG and a mobility configuration identifier of the mobility configuration is a mobility identifier corresponding to a latest triggered mobility operation, it may be determined that the candidate SCG is a serving secondary cell group of the UE; or, when a certain mobility configuration contains configuration information of the candidate SCG and a mobility configuration identifier of the mobility configuration is not a mobility identifier corresponding to a latest triggered mobility operation, it may be determined that the candidate SCG is not a serving secondary cell group of the UE.

For example, in a case that the first cell is a candidate PCell, when a certain mobility configuration contains configuration information of the candidate PCell and a mobility configuration identifier of the mobility configuration is a mobility identifier corresponding to a latest triggered mobility operation, it may be determined that the candidate PCell is a serving primary cell of the UE; or, when a certain mobility configuration contains configuration information of the candidate PCell and a mobility configuration identifier of the mobility configuration is not a mobility identifier corresponding to a latest triggered mobility operation, it may be determined that the candidate PCell is not a serving primary cell of the UE.

For example, in a case that the first cell is a candidate PSCell, when a certain mobility configuration contains configuration information of the candidate PSCell and a mobility configuration identifier of the mobility configuration is a mobility identifier corresponding to a latest triggered mobility operation, it may be determined that the candidate PSCell is a serving primary secondary cell of the UE; or, when a certain mobility configuration contains configuration information of the candidate PSCell, and a mobility configuration identifier of the mobility configuration is not a mobility identifier corresponding to a latest triggered mobility operation, it may be determined that the candidate PSCell is not a serving primary secondary cell of the UE.

For example, in a case that the first cell is a candidate SCell, when a certain mobility configuration contains configuration information of the candidate SCell and a mobility configuration identifier of the mobility configuration is a mobility identifier corresponding to a latest triggered mobility operation, it may be determined that the candidate SCell is a serving secondary cell of the UE; or, when a certain mobility configuration contains configuration information of the candidate SCell and a mobility configuration identifier of the mobility configuration is not a mobility identifier corresponding to a latest triggered mobility operation, it may be determined that the candidate SCell is not a serving secondary cell of the UE.

In some examples, determining whether the first cell is the serving cell of the UE according to whether the mobility configuration of the first cell is consistent with the mobility configuration of the serving cell may include:
determining that the first cell is the serving cell of the UE when the mobility configuration of the first cell is consistent with the mobility configuration of the serving cell; or determining that the first cell is not the serving cell of the UE when the mobility configuration of the first cell is inconsistent with the mobility configuration of the serving cell.

For example, in a case that the first cell is a candidate MCG, when a mobility configuration of the candidate MCG is consistent with a mobility configuration of a serving master cell group of the UE, it is determined that the first cell is the serving master cell group of the UE; or, when a mobility configuration of the candidate MCG is inconsistent with a mobility configuration of a serving master cell group of the UE, it is determined that the first cell is not the serving master cell group of the UE.

For example, in a case that the first cell is a candidate SCG, when a mobility configuration of the candidate SCG is consistent with a mobility configuration of a serving secondary cell group of the UE, it is determined that the first cell is the serving secondary cell group of the UE; or, when a mobility configuration of the candidate SCG is inconsistent with a mobility configuration of a serving secondary cell group of the UE, it is determined that the first cell is not the serving secondary cell group of the UE.

For example, in a case that the first cell is a candidate PCell, when a mobility configuration of the candidate PCell is consistent with a mobility configuration of a serving primary cell of the UE, it is determined that the first cell is the serving primary cell of the UE; or, when a mobility configuration of the candidate PCell is inconsistent with a mobility configuration of a serving primary cell of the UE, it is determined that the first cell is not the serving primary cell of the UE.

For example, when the first cell is a candidate PSCell, when a mobility configuration of the candidate PSCell is consistent with a mobility configuration of a serving primary secondary cell of the UE, it is determined that the first cell is the serving primary secondary cell of the UE; or, when a mobility configuration of the candidate PSCell is inconsistent with a mobility configuration of a serving primary secondary cell of the UE, it is determined that the first cell is not the serving primary secondary cell of the UE.

For example, in a case that the first cell is a candidate SCell, when a mobility configuration of the candidate SCell is consistent with a mobility configuration of a serving secondary cell of the UE, it is determined that the first cell is the serving secondary cell of the UE; or, when a mobility configuration of the candidate SCell is inconsistent with a mobility configuration of a serving secondary cell of the UE, it is determined that the first cell is not the serving secondary cell of the UE.

In some examples, determining whether the first cell is the serving cell of the UE according to whether the applicable cell indicated by the mobility configuration of the first cell is the serving cell includes:
determining that the first cell is the serving cell of the UE when the applicable cell indicated by the mobility configuration of the first cell is the serving cell; or determining that the first cell is not the serving cell of the UE when the applicable cell indicated by the mobility configuration of the first cell is not the serving cell.

For example, in a case that the first cell is a candidate MCG or a candidate PCell, and a cell indicated in a serving cell public configuration contained in configuration information of the candidate MCG or the candidate PCell in a corresponding mobility configuration is an applicable cell, when the applicable cell is a serving primary cell, it is determined that the first cell is a serving primary cell of the UE; or, when the applicable cell is not a serving primary cell, it is determined that the first cell is not a serving primary cell of the UE.

For example, in a case that the first cell is a candidate SCG or a candidate PSCell, and a cell indicated in a serving cell public configuration contained in configuration information of the candidate SCG or the candidate PSCell in a corresponding mobility configuration is an applicable cell, when the applicable cell is a serving primary secondary cell, it is determined that the first cell is a serving primary secondary cell of the UE; or, when the applicable cell is not a serving primary secondary cell, it is determined that the first cell is not a serving primary secondary cell of the UE.

In an embodiment, the method may further includes:
storing one or more mobility configurations configured by a network device for the UE, in which different mobility configurations correspond to different cells or cell groups.

In some examples, the network device may be a base station, for example, the network device may be a gNB, an eNB, etc.

In some examples, the mobility configuration of the first cell may be stored by the UE as a variable. For example, the variable may be a Var variable, for example, the Var variable is VarConditionalReconfig.

Hereinafter, the technical scheme provided by the embodiments of the present disclosure will be illustratively explained in combination with specific application scenarios. It may be understood that the application scenarios here are only for more clearly explaining the technical scheme provided by the embodiments of the present disclosure, and do not constitute limitations on the application scenarios of the technical scheme provided by the embodiments of the present disclosure.

The embodiments of the present disclosure provide an information processing method, which standardizes the evaluation of executing the selective activation and the executed UE behavior after the UE executes the cell change and retains the selective activation configuration for activating the cell group configuration.

In some embodiments, the mobility configuration corresponding to the current serving cell group/cell is not evaluated, or the mobility configuration corresponding to the non-serving cell group/cell is evaluated.

In some embodiments, in a case that the mobility configuration meeting the trigger condition is the mobility configuration corresponding to the current serving cell group/cell, corresponding cell group/cell configuration information in this mobility configuration is not applied; or, for the cell group/cell that meets the trigger condition, in a case that this cell group/cell is not the current serving cell group/cell, configuration information of this cell group/cell in this mobility configuration may be applied.

In some embodiments, the corresponding measurement in the trigger condition in the mobility configuration information corresponding to the current serving cell group/cell is not initiated.

In some examples, in a case that a certain measurement identifier only corresponds to the mobility configuration of the current serving cell, the UE will not initiate the measurement corresponding to the measurement identifier.

In some examples, in a case that each measurement identifier associated with a certain measurement object is a measurement identifier corresponding to the mobility configuration of the current serving cell, the UE does not measure the measurement object.

In some examples, the cell group may be a master cell group (MCG) or a secondary cell group (SCG), and the cell may be one of a primary cell (PCell), a primary secondary cell (PSCell) or a secondary cell (SCell).

In some examples, the mobility configuration includes, but is not limited to, one or more of:
a configuration identifier (for example: condReconfigId);
a trigger condition (e.g., condExecutionCond and/or condExecutionCondSCG), in which the trigger condition may be represented by one or more measurement identifiers;
candidate cell group/cell configuration information (for example, condRRCReconfig), in which the candidate cell group/cell configuration information may be represented by RRCReconfiguration; and
indication information indicating that the mobility configuration is used for a first mobility operation (e.g., selective activation of a cell group).

In some examples, the UE receives one or more mobility configurations sent by a network device, and stores the received mobility configurations through a Var variable. For example, the Var variable may be VarConditionalReconfig.

In some embodiments, for the mobility configuration stored by the UE, not evaluating the mobility configuration corresponding to the serving cell group/cell, or evaluating the mobility configuration corresponding to the non-serving cell group/cell may include one of the following ways.

Way 1: in a case that the candidate cell group/cell corresponding to a certain mobility configuration is the current serving cell group/cell, the corresponding evaluation is not initiated; or, in a case that the candidate cell group/cell corresponding to a certain mobility configuration is not the current serving cell group/cell, the corresponding evaluation is initiated.

For example, for each mobility configuration identifier stored by the UE, in a case that the cell group/cell identifier corresponding to the configuration information of the candidate cell group/cell contained in the corresponding mobility configuration is the current serving cell group/cell, the corresponding evaluation process is not initiated. Alternatively, for each mobility configuration identifier stored by the UE, in a case that the cell group/cell identifier corresponding to the configuration information of the candidate cell group/cell contained in the corresponding mobility configuration is not the current serving cell group/cell, the corresponding evaluation is initiated.

Way 2: in a case that a certain mobility configuration identifier is the mobility identifier corresponding to the latest triggered mobility operation, the corresponding evaluation is not initiated; or, in a case that a certain mobility configuration identifier is not the mobility identifier corresponding to the latest triggered mobility operation, the corresponding evaluation is initiated.

For example, for each mobility configuration identifier stored by the UE, in a case that the corresponding mobility configuration identifier is the mobility configuration identifier corresponding to the latest triggered mobility operation, the corresponding evaluation process is not initiated. Alternatively, for each mobility configuration identifier stored by the UE, in a case that the corresponding mobility configuration is the mobility configuration corresponding to the latest triggered mobility operation, the corresponding evaluation is initiated for the configuration identifier corresponding to this mobility configuration.

Way 3: in a case that a certain mobility configuration is consistent with the configuration of the current serving cell group or cell, the corresponding evaluation is initiated; or, in a case that a certain mobility configuration is inconsistent with the configuration of the current serving cell group or cell, the corresponding evaluation is initiated.

For example, for each mobility configuration identifier stored by the UE, in a case that the candidate cell group/cell configuration information contained in the corresponding mobility configuration is the configuration information currently applied, the corresponding evaluation process is not initiated. Alternatively, for each mobility configuration identifier stored by the UE, in a case that the corresponding candidate cell group/cell configuration information in the corresponding mobility configuration is not the configuration information currently applied, the corresponding evaluation is initiated.

Way 4: in a case that the applicable cell corresponding to a certain mobility configuration identifier is the current serving cell, the corresponding evaluation is not initiated; or, in a case that the applicable cell corresponding to a certain mobility configuration identifier is not the current serving cell, the corresponding evaluation is initiated.

For example, for each mobility configuration identifier stored by the UE, in a case that the cell indicated in the serving cell public configuration contained in the candidate cell group/cell configuration information contained in the corresponding mobility configuration is the applicable cell, when the applicable cell is the serving cell, the evaluation process is not executed, or, when the applicable cell is not the current serving cell, the subsequent evaluation process is executed, to evaluate whether the trigger condition in this mobility configuration is met.

In some embodiments, in a case that the mobility configuration corresponding to the candidate cell group/cell meeting the trigger condition is the mobility configuration corresponding to the current serving cell group/cell, the configuration information of the corresponding cell group/cell in this mobility configuration is not applied, or for the cell group/cell meeting the trigger condition, in a case that this cell group/cell is not the current serving cell group/cell, the configuration information of this cell group/cell in this mobility configuration may be applied, which may include one of the following ways.

Way 1: in a case that the candidate cell group/cell meeting the trigger condition is the current serving cell group/cell, it cannot be the trigger cell group/cell, or in a case that the candidate cell group/cell meeting the trigger condition is not the current serving cell group/cell, it is the trigger cell group/cell.

For example, for each mobility configuration identifier stored by the UE, in a case that the trigger condition corresponding to the mobility configuration identifier is met and the candidate cell group/cell corresponding to the mobility configuration identifier is not the current serving cell group/cell, this candidate cell group/cell is the trigger cell group/cell. Otherwise, for each mobility configuration identifier stored by the UE, in a case that the trigger condition corresponding to the mobility configuration identifier is met, but the candidate cell group or cell corresponding to the mobility configuration identifier is the current serving cell group/cell, this candidate cell group/cell cannot be the trigger cell group/cell.

Way 2: when executing the mobility operation, the UE selects the selected cell group/cell from the trigger cell group/cell of the non-serving cell group/cell, or the UE does not select the serving cell group/cell as the selected cell group/cell.

For example, when executing the mobility operation, the UE selects the selected cell group/cell from the trigger cell group/cell of the non-serving cell group/cell, or the UE does not select the serving cell group/cell as the selected cell group/cell.

For example, when executing the condition-based mobility operation, in a case that the last mobility operation is also a condition-based mobility operation, the UE selects the selected cell group/cell from the trigger cell group/cell of the non-serving cell group/cell, or the UE does not select the serving cell group/cell as the selected cell group/cell.

For example, when executing the mobility operation, in a case that the candidate cell corresponding to the mobility operation configuration stored by the UE is the serving cell group/cell and the current serving cell group/cell configuration information of the UE is the same as the configuration corresponding to this candidate cell, the UE selects the selected cell group/cell from the trigger cell group/cell of the non-serving cell group/cell, or the UE does not select the serving cell group/cell as the selected cell group or cell.

For example, in a case that there are multiple trigger cells that are not the serving cells, the trigger cell of one non-serving cell is selected as the selected cell, and in a case that there is one trigger cell that is not the serving cell, the trigger cell is the selected cell.

For example, in a case that there are multiple selected cells, the selected cell is selected from the trigger cell of the non-serving cell group or cell. Otherwise, in a case that the trigger cell is the non-serving cell, the trigger cell is the selected cell.

Way 3: when executing the mobility operation, the UE does not apply the corresponding cell group/cell configuration information in a case that the selected access cell group/cell is the current serving cell group/cell, or applies the corresponding cell group/cell configuration information in a case that the selected access cell group/cell is not the current serving cell group/cell.

For example, when executing the mobility operation, the UE does not apply the corresponding cell group/cell configuration information in a case that the selected access cell group/cell is the current serving cell group/cell, or applies the corresponding cell group/cell configuration information in a case that the selected access cell group/cell is not the current serving cell group/cell.

For example, when executing the condition-based mobility operation, in a case that the last mobility operation is also a condition-based mobility operation, the UE does not apply the corresponding cell group/cell configuration information if the selected access cell group/cell is the current serving cell group/cell, or applies the corresponding cell group/cell configuration information if the selected access cell group/cell is not the current serving cell group/cell.

For example, when executing the mobility operation, in a case that the selected access cell group/cell is the current serving cell group/cell, and the configuration information of the current serving cell group/cell of the UE is the same as the configuration corresponding to the selected cell group/cell, the corresponding cell group/cell configuration information is not applied; or, in a case that the selected access cell group/cell is not the current serving cell group/cell or the configuration information of the current serving cell group/cell of the UE is different from the configuration corresponding to the selected cell group/cell, the corresponding cell group/cell configuration information is applied.

For example, when executing the mobility operation, for the selected cell, in a case that this cell is not the serving cell, the stored configuration information (for example, condRRCReconfig) of the selected cell is applied, to execute a behavior related to receiving RRC reconfiguration information.

In some embodiments, not initiating the corresponding measurement in the trigger condition in the mobility configuration information corresponding to this serving cell may include one of the following ways.

Way 1: in a case that a certain measurement identifier only corresponds to the mobility configuration of the current serving cell, the UE will not initiate the measurement corresponding to this measurement identifier.

For example, for each measurement identifier in variables of the measurement configuration stored by the UE, in a case that the reporting type is conditional trigger configuration, and the cell group identifier (or the cell identifier PCI) indicated by the cell group configuration (or the serving cell configuration) contained in the RRC reconfiguration corresponding to the cell group configuration associated with the reporting type is not the current serving cell group/cell, the corresponding measurement result is obtained.

Way 2: in a case that each measurement identifier associated with a certain measurement object is the measurement identifier corresponding to the mobility configuration of the current serving cell, and this measurement object is not the measurement object of the serving cell, the UE does not measure the measurement object.

Fig. 12 is a schematic diagram of an information processing apparatus according to an illustrative embodiment. The information processing apparatus is applied to a user equipment (UE), and as shown in Fig. 12, the information processing apparatus 100 may include:
a processing module 110 configured to determine whether to execute an operation related to a mobility configuration of a first cell according to whether the first cell is a serving cell of the UE.

In an embodiment, the processing module 110 is configured to perform one of:
determining whether to initiate a measurement corresponding to a trigger condition of the mobility configuration of the first cell according to whether the first cell is the serving cell of the UE;
determining whether to evaluate the trigger condition of the mobility configuration of the first cell according to whether the first cell is the serving cell of the UE; and
determining whether to execute the mobility configuration of the first cell according to whether the first cell is the serving cell of the UE.

In an embodiment, the processing module 110 is configured to perform at least one of:
in response to the first cell being the serving cell of the UE, not initiating the measurement corresponding to the trigger condition of the mobility configuration of the first cell; and
in response to the first cell not being the serving cell of the UE, initiating the measurement corresponding to the trigger condition of the mobility configuration of the first cell.

In an embodiment, the processing module 110 is configured to perform at least one of:
in response to that the first cell is the serving cell of the UE and a measurement identifier corresponding to the trigger condition of the mobility configuration of the first cell is not associated with mobility configurations of other cells, not initiating a measurement of the measurement identifier corresponding to the trigger condition of the mobility configuration of the first cell; and
in response to that the first cell is the serving cell of the UE, and a single measurement object associated with the measurement identifier corresponding to the trigger condition of the mobility configuration of the first cell is not associated with other measurement identifiers, not initiating the measurement corresponding to the trigger condition of the mobility configuration of the first cell.

**In** an embodiment, the processing module 110 is configured to perform at least one of:
in response to the first cell being the serving cell of the UE, not evaluating the trigger condition of the mobility configuration of the first cell; and
in response to the first cell not being the serving cell of the UE, evaluating the trigger condition of the mobility configuration of the first cell.

In an embodiment, the processing module 110 is configured to perform at least one of:
in response to the first cell being the serving cell of the UE, not executing the mobility configuration of the first cell in a case that the trigger condition of the mobility configuration of the first cell is met; and
in response to the first cell not being the serving cell of the UE, determining to execute the mobility configuration of the first cell in a case that the trigger condition of the mobility configuration of the first cell is met.

In an embodiment, the processing module 110 is configured to perform at least one of:
in response to the trigger condition of the mobility configuration of the first cell being met and the first cell being the serving cell of the UE, the first cell not being a trigger cell;
in response to the trigger condition of the mobility configuration of the first cell being met and the first cell being the serving cell of the UE, not selecting the first cell as a selected cell; and
in response to that the first cell meeting the trigger condition is the serving cell of the UE and the first cell is the selected cell, not applying configuration information contained in the mobility configuration of the first cell.

In an embodiment, the processing module 110 is configured to:
in a case that both a mobility operation executed this time and a last mobility operation are condition-based mobility operations, not select the first cell as the selected cell in response to the trigger condition of the mobility configuration of the first cell being met and the first cell being the serving cell of the UE.

In an embodiment, the processing module 110 is configured to perform at least one of:
in response to the trigger condition of the mobility configuration of the first cell being met and the first cell not being the serving cell of the UE, the first cell being a trigger cell;
in response to the trigger condition of the mobility configuration of the first cell being met and the first cell not being the serving cell of the UE, selecting the selected cell from the first cell; and
in response to that the first cell meeting the trigger condition is not the serving cell of the UE and the first cell is selected as the selected cell, applying the configuration information contained in the mobility configuration of the first cell.

In an embodiment, the processing module 110 is configured to:
in a case that both a mobility operation executed this time and a last mobility operation are condition-based mobility operations, determine to select the first cell as the selected cell in response to the trigger condition of the mobility configuration of the first cell being met and the first cell not being the serving cell of the UE.

In an embodiment, the processing module 110 is further configured to perform at least one of:
determining whether the first cell is the serving cell of the UE according to whether configuration information contained in the mobility configuration of the first cell corresponds to a cell identifier of the serving cell;
determining whether the first cell is the serving cell of the UE according to whether a configuration identifier of the mobility configuration of the first cell corresponds to a latest triggered mobility operation;
determining whether the first cell is the serving cell of the UE according to whether the mobility configuration of the first cell is consistent with a mobility configuration of the serving cell; and
determining whether the first cell is the serving cell of the UE according to whether an applicable cell indicated by the mobility configuration of the first cell is the serving cell.

In an embodiment, the first cell is a candidate cell group and the serving cell is a serving cell group;
or
the first cell is a candidate cell in a candidate cell group, and the serving cell is a serving cell in a serving cell group.

In an embodiment, the mobility configuration of the first cell includes at least one of:
a configuration identifier;
a trigger condition associated with one or more measurement identifiers;
configuration information of a candidate cell group or a candidate cell; and
indication information indicating that the mobility configuration is used for a mobility operation.

In an embodiment, the candidate cell group is a master cell group or a secondary cell group; and
the candidate cell is a primary cell, a primary secondary cell, or a secondary cell.

In an embodiment, the mobility configuration is used for selective activation of a cell group or selective activation of a cell.

In an embodiment, the apparatus further includes:
a storage module configured to store one or more mobility configurations configured by a network device for the UE, in which different mobility configurations correspond to different cells or cell groups.

With regard to the apparatus in the above embodiments, the specific way in which each module performs operations has been described in detail in the embodiments of the method, and will not be described in detail here.

An embodiment of the present disclosure provides a communication device, including:
a memory for storing processor-executable instructions; and
a processor connected with the memory.

The processor is configured to execute the information processing method provided by any of the foregoing technical schemes.

The processor may include various types of storage media, which are non-transitory computer storage media, and may continue to remember the information stored thereon after power failure of the communication device.

Here, the communication device includes UE.

The processor may be connected to the memory through a bus or the like, for reading executable programs stored on the memory, for example, at least one of the information processing methods shown in Figs. 3 to 11.

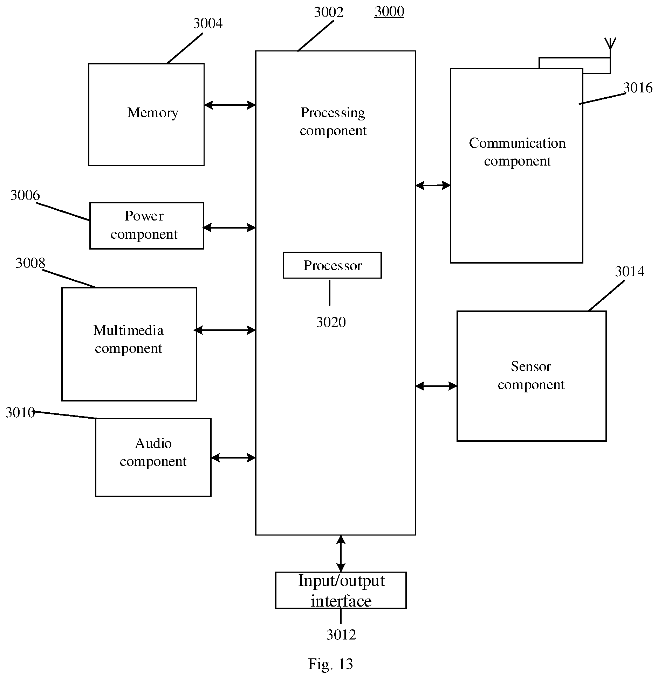

Fig. 13 is a block diagram of a communication device 3000 for data transmission according to an illustrative embodiment. For example, the communication device 3000 may be a mobile phone, a computer, a digital broadcasting terminal, a messaging device, a game console, a tablet device, a medical device, a fitness device, a personal digital assistant and the like.

Referring to Fig. 13, a communication device 3000 may include one or more of the following components: a processing component 3002, a memory 3004, a power component 3006, a multimedia component 3008, an audio component 3010, an input/output (I/O) interface 3012, a sensor component 3014, and a communication component 3016.

The processing component 3002 generally controls the overall operation of the communication device 3000, such as operations associated with display, telephone call, data communication, camera operation and recording operation. The processing component 3002 may include one or more processors 3020 to execute instructions to complete all or part of the steps of the method described above. In addition, the processing component 3002 may include one or more modules to facilitate the interaction between the processing component 3002 and other components. For example, the processing component 3002 may include a multimedia module to facilitate the interaction between the multimedia component 3008 and the processing component 3002.

The memory 3004 is configured to store various types of data to support operations in the device 3000. Examples of these data include instructions for any application or method operating on the communication device 3000, contact data, phone book data, messages, pictures, videos, and the like. The memory 3004 may be realized by any type of volatile or nonvolatile memory device or their combination, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk or an optical disk.

The power supply component 3006 provides power to various components of the communication device 3000. The power component 3006 may include a power management system, one or more power supplies, and other components associated with generating, managing and distributing power for the communication device 3000.

The multimedia component 3008 includes a screen that provides an output interface between the communication device 3000 and the user. In some embodiments, the screen may include a liquid crystal display (LCD) and a touch panel (TP). When the screen includes a touch panel, the screen may be implemented as a touch screen to receive an input signal from the user. The touch panel includes one or more touch sensors to sense touch, sliding and gestures on the touch panel. The touch sensor may not only sense the boundary of the touch or sliding action, but also detect the duration and pressure related to the touch or sliding operation. In some embodiments, the multimedia component 3008 includes a front camera and/or a rear camera. When the device 3000 is in an operation mode, such as a shooting mode or a video mode, the front camera and/or the rear camera may receive external multimedia data. Each of the front camera and the rear camera may be a fixed optical lens system or have a focal length and an optical zoom capability.

The audio component 3010 is configured to output and/or input audio signals. For example, the audio component 3010 includes a microphone (MIC) configured to receive external audio signals when the communication device 3000 is in operation modes, such as a call mode, a recording mode and a voice recognition mode. The received audio signal may be further stored in the memory 3004 or transmitted via the communication component 3016. In some embodiments, the audio component 3010 further includes a speaker for outputting audio signals.

The I/O interface 3012 provides an interface between the processing component 3002 and a peripheral interface module, which may be a keyboard, a click wheel, a button, etc. The button may include, but is not limited to, a home button, a volume button, a start button and a lock button.

The sensor component 3014 includes one or more sensors for providing various aspects of status assessments for the communication device 3000. For example, the sensor component 3014 may detect an on/off state of the device 3000, the relative positioning of components, such as the display and keypad of the communication device 3000, the position change of the communication device 3000 or the component of the communication device 3000, the presence or absence of contact of the user with the communication device 3000, the orientation or acceleration/deceleration of the communication device 3000 and the temperature change of the communication device 3000. The sensor component 3014 may include a proximity sensor configured to detect the presence of a nearby object without any physical contact. The sensor component 3014 may also include an optical sensor, such as a CMOS or CCD image sensor, for use in imaging applications. In some embodiments, the sensor component 3014 may further include an acceleration sensor, a gyro sensor, a magnetic sensor, a pressure sensor or a temperature sensor.

The communication component 3016 is configured to facilitate wired or wireless communication between the communication device 3000 and other devices. The communication device 3000 may access a wireless network based on communication standards, such as Wi-Fi, 4G or 5G, or a combination thereof. In an illustrative embodiment, the communication component 3016 receives a broadcast signal or broadcast related information from an external broadcast management system via a broadcast channel. In an illustrative embodiment, the communication component 3016 also includes a near field communication (NFC) module to facilitate short-range communication. For example, the NFC module may be implemented based on radio frequency identification (RFID) technology, infrared data association (IrDA) technology, ultra-wideband (UWB) technology, Bluetooth (BT) technology and other technologies.

In an illustrative embodiment, the communication device 3000 may be implemented by one or more application specific integrated circuits (ASICs), digital signal processors (DSPs), digital signal processing devices (DSPDs), programmable logic devices (PLDs), field programmable gate arrays (FPGAs), controllers, microcontrollers, microprocessors or other electronic components, for performing the above methods.

In an illustrative embodiment, there is also provided a non-transitory computer-readable storage medium including instructions, such as a memory 3004 including instructions, which may be executed by the processor 3020 of the communication device 3000 to complete the above method. For example, the non-transitory computer-readable storage medium may be a ROM, a random access memory (RAM), a CD-ROM, a magnetic tape, a floppy disk and an optical data storage device.

Those skilled in the art will easily think of other implementations of the embodiments of the present disclosure after considering the specification and practicing the invention disclosed herein. The present disclosure is intended to cover any variation, use or adaptation of the embodiments of the present disclosure, which follow the general principles of the embodiments of the present disclosure and include common sense or common technical means in the technical field that are not disclosed in the embodiments of the present disclosure. The specification and embodiments are to be regarded as illustrative only, with the true scope and spirit of the embodiments of the present disclosure being indicated by the following claims.

It should be understood that the embodiments of the present disclosure are not limited to the precise structures that have been described above and shown in the drawings, and various modifications and changes may be made without departing from the scope thereof. The scope of the embodiments of the present disclosure is limited only by the append claims.

## Claims

1. **An** information processing method, performed by a user equipment (UE), and comprising:
determining whether to execute an operation related to a mobility configuration of a first cell according to whether the first cell is a serving cell of the UE.

2. The method according to claim 1, wherein determining whether to execute the operation related to the mobility configuration of the first cell according to whether the first cell is the serving cell of the UE comprises one of:
determining whether to initiate a measurement corresponding to a trigger condition of the mobility configuration of the first cell according to whether the first cell is the serving cell of the UE;
determining whether to evaluate the trigger condition of the mobility configuration of the first cell according to whether the first cell is the serving cell of the UE; and
determining whether to execute the mobility configuration of the first cell in a case that the trigger condition of the mobility configuration of the first cell is met, according to whether the first cell is the serving cell of the UE.

3. The method according to claim 2, wherein determining whether to initiate the measurement corresponding to the trigger condition of the mobility configuration of the first cell according to whether the first cell is the serving cell of the UE comprises at least one of:
in response to the first cell being the serving cell of the UE, not initiating the measurement corresponding to the trigger condition of the mobility configuration of the first cell; or
in response to the first cell not being the serving cell of the UE, initiating the measurement corresponding to the trigger condition of the mobility configuration of the first cell.

4. The method according to claim 3, wherein in response to the first cell being the serving cell of the UE, not initiating the measurement corresponding to the trigger condition of the mobility configuration of the first cell comprises:
in response to the first cell being the serving cell of the UE and a measurement identifier corresponding to the trigger condition of the mobility configuration of the first cell not being associated with mobility configurations of other cells, not initiating a measurement of the measurement identifier corresponding to the trigger condition of the mobility configuration of the first cell.

5. The method according to claim 2, wherein determining whether to evaluate the trigger condition of the mobility configuration of the first cell according to whether the first cell is the serving cell of the UE comprises at least one of:
in response to the first cell being the serving cell of the UE, not evaluating the trigger condition of the mobility configuration of the first cell; or
in response to the first cell not being the serving cell of the UE, evaluating the trigger condition of the mobility configuration of the first cell.

6. The method according to claim 2, wherein determining whether to execute the mobility configuration of the first cell in a case that the trigger condition of the mobility configuration of the first cell is met, according to whether the first cell is the serving cell of the UE, comprises at least one of:
in response to the first cell being the serving cell of the UE, in a case that the trigger condition of the mobility configuration of the first cell is met, not executing the mobility configuration of the first cell; or
in response to the first cell not being the serving cell of the UE, in a case that the trigger condition of the mobility configuration of the first cell is met, executing the mobility configuration of the first cell.

7. The method according to claim 6, wherein in response to the first cell being the serving cell of the UE, in a case that the trigger condition of the mobility configuration of the first cell is met, not executing the mobility configuration of the first cell comprises at least one of:
in response to the trigger condition of the mobility configuration of the first cell being met and the first cell being the serving cell of the UE, the first cell not being a trigger cell;
in response to the trigger condition of the mobility configuration of the first cell being met and the first cell being the serving cell of the UE, not selecting the first cell as a selected cell; or
in response to that the first cell meeting the trigger condition is the serving cell of the UE and the first cell is a selected cell, not applying the configuration information contained in the mobility configuration of the first cell.

8. The method according to claim 7, wherein not selecting the first cell as the selected cell in response to the trigger condition of the mobility configuration of the first cell being met and the first cell being the serving cell of the UE comprises:
in a case that both a mobility operation executed this time and a last mobility operation are condition-based mobility operations, not selecting the first cell as the selected cell in response to the trigger condition of the mobility configuration of the first cell being met and the first cell being the serving cell of the UE.

9. The method according to claim 6, wherein in response to the first cell not being the serving cell of the UE, in a case that the trigger condition of the mobility configuration of the first cell is met, executing the mobility configuration of the first cell comprises at least one of:
in response to the trigger condition of the mobility configuration of the first cell being met and the first cell not being the serving cell of the UE, the first cell being a trigger cell;
in response to the trigger condition of the mobility configuration of the first cell being met and the first cell not being the serving cell of the UE, selecting a selected cell from the first cell; or
in a case that the first cell meeting the trigger condition is not the serving cell of the UE, and the first cell is selected as the selected cell, applying configuration information contained in the mobility configuration of the first cell.

10. The method according to claim 9, wherein in response to the trigger condition of the mobility configuration of the first cell being met and the first cell not being the serving cell of the UE, selecting the first cell as the selected cell comprises:
in a case that both a mobility operation executed this time and a last mobility operation are condition-based mobility operations, in response to the trigger condition of the mobility configuration of the first cell being met and the first cell not being the serving cell of the UE, selecting the first cell as the selected cell.

11. The method according to any one of claims **1-10,** further comprising at least one of:
determining whether the first cell is the serving cell of the UE according to whether configuration information contained in the mobility configuration of the first cell corresponds to a cell identifier of the serving cell;
determining whether the first cell is the serving cell of the UE according to whether a configuration identifier of the mobility configuration of the first cell corresponds to a latest triggered mobility operation;
determining whether the first cell is the serving cell of the UE according to whether the mobility configuration of the first cell is consistent with a mobility configuration of the serving cell; or
determining whether the first cell is the serving cell of the UE according to whether an applicable cell indicated by the mobility configuration of the first cell is the serving cell.

12. The method according to any one of claims 1-11, wherein
the first cell is a candidate cell group, and the serving cell is a serving cell group; or
the first cell is a candidate cell in a candidate cell group, and the serving cell is a serving cell in a serving cell group.

13. The method according to claim 1, wherein the mobility configuration of the first cell comprises at least one of:
a configuration identifier;
a trigger condition associated with one or more measurement identifiers;
configuration information of a candidate cell group or a candidate cell; or
indication information indicating that the mobility configuration is configured for a mobility operation.

14. The method according to claim 12, wherein
the candidate cell group is a master cell group or a secondary cell group; and
the candidate cell is a primary cell, a primary secondary cell, or a secondary cell.

15. The method according to any one of claims 12-14, wherein the mobility configuration is configured for selective activation of a cell group or a cell.

16. The method according to any one of claims 1-15, further comprises:
storing one or more mobility configurations configured by a network device for the UE, wherein different mobility configurations correspond to different cells or cell groups.

17. An information processing apparatus, applied to a user equipment (UE), and comprising:
a processing module configured to determine whether to execute an operation related to mobility configuration of a first cell according to whether the first cell is a serving cell of the UE.

18. A communication device, comprising a processor, a memory and an executable program stored in the memory and configured to be executed by the processor, wherein the processor executes the information processing method according to any one of claims 1-16 when executing the executable program.

19. A computer storage medium, storing an executable program that, when executed by a processor, causes the information processing method according to any one of claims 1-16 to be realized.
